# EUROPEAN PATENT SPECIFICATION

(11) **EP 2 721 751 B1**
(45) Date of publication and mention of the grant of the patent: **16.08.2017**
(21) Application number: 12730597.7
(22) Date of filing: 18.06.2012
(51) Int. Cl.: H04Q 11/00, H04J 9/00, H04J 14/02

(54) **COMMUNICATIONS NETWORK**
KOMMUNIKATIONSNETZWERK
RÉSEAU DE COMMUNICATION

(30) Priority: 20.06.2011 EP 11250602; 25.07.2011 GB 201112713
(43) Date of publication of application: 23.04.2014
(73) Proprietor: British Telecommunications Public Limited Company, London EC1A 7AJ (GB)
(72) Inventor: LORD, Andrew, London EC1Y 7AJ (GB)
(74) Representative: Wilson, Peter David
(86) International application number: PCT/GB2012/000528
(87) International publication number: WO 2012/175913

(56) References cited:
- US-A- 5 896 211
- MICHAEL S BORELLA ET AL: "Optical Components for WDM Lightwave Networks", PROCEEDINGS OF THE IEEE, IEEE. NEW YORK, US, vol. 85, no. 8, 1 August 1997 (1997-08-01) , XP011043873, ISSN: 0018-9219

## Description

The present invention relates to an optical communications network and in particular to an optical communications network which can support optical signals of different formats.

Conventional optical communication networks operate by sending light pulses of a predetermined period, for example such that a pulse represents a '1' and no pulse represents a '0'. This technique enables signals to be sent at data rates of up to 10 Gb/s and wavelength division multiplexing (WDM) techniques can be used to send multiple signals over a single fibre. Dense WDM (DWDM) enables up to 160 wavelengths to be used such that a single fibre can potentially carry 1.6 Tb/s of data. In order to enable compatibility between network components from different vendors, the ITU has specified a grid of wavelengths that are used in DWDM systems (see ITU-T G.694.1). One of the transmission phenomena present in optical fibres is chromatic dispersion, which causes the transmitted pulse to spread out, such that it becomes difficult to recover the transmitted signal at the receiver. The effects of dispersion can be mitigated by installing dispersion compensating modules (DCMs) into the network, but this adds to the cost and the complexity of the network.

Coherent optical transmission systems are thought to provide the best option for transmitting data at a rate in excess of 40 Gb/s. Coherent optical transmission systems are similar to the transmission systems used in wireless systems. Rather than turning an optical transmitter on and off to generate a pulse, an optical signal is modulated, for example in terms of phase or frequency, with a data signal. When the optical signal is received it is then recovered using a local oscillator and the transmitted data can be obtained by demodulating the optical signal. Dispersion is less of a problem and can be compensated for electronically during the demodulation of the optical signal, so it will be seen that coherent optical transmission systems do not require DCMs to be installed in the network, and in fact they work better without.

As data transmission rates increase further, for example beyond 100 Gb/s, then the optical signals required to transmit such data rates may not fit into the grid of wavelengths that are defined in the DWDM specifications. It is preferred, for reasons of flexibility and spectral efficiency, that for such high data rates, network operators are able to determine which regions of the optical transmission window are used to transmit specific signals. For example, one signal may extend across the space in the window that is reserved for multiple DWDM wavelengths.

US 5 896 211 discloses a WDM system in which different data signals are transmitted using different wavelengths of a transmission window. Borella et al ("Optical Components for WDM Lightwave Networks", Proc. IEEE, vol. 85, no. 8, 1st August 1997 describes similar networks in which different data signals are transmitted using different optical wavelengths

According to a first aspect of the present invention there is provided an optical communications network comprising: a first optical source configured, in use, to generate a first optical signal in a first wavelength region; a second optical source configured, in use, to generate a second optical signal in a second wavelength region; combining means to launch the first optical signal and the second optical signal into an optical fibre; and a separation means which can be configured, in use, to selectively route optical signals in the first wavelength region to a first output port and optical signals in the second wavelength region to a second output port characterised in that: i) the first optical signal comprises one or more non-coherent signals being transmitted at wavelengths associated with a predetermined wavelength grid; and ii) the second optical signal comprises one or more coherent optical signals.

The separation means may comprise one or more tunable optical filters. Such tunable optical filters may have a cut off wavelength, the filters being configured, in use, to selectively route optical signals in the first wavelength region to a first output port and optical signals in the second wavelength region to a second output port.

Alternatively, the separation means may comprise one or more wavelength selective switches, the switches being configured, in use, to selectively route optical signals in the first wavelength region to a first output port and optical signals in the second wavelength region to a second output port.

Such an optical network enables different, and potentially incompatible, optical signals to be transmitted within the same optical fibre. This may enable network operators to expand and upgrade their networks in a more flexible manner. For example, a portion of the transmission window could be used to deploy immediately a number of conventional wavelengths using DWDM and reserve a portion of the transmission window for coherent or flexgrid optical signals. In the medium to long term, these more advanced transmission technologies can be deployed in the second wavelength region. Over time, the size of the second wavelength region can be increased relative to the first wavelength region such that the information carrying capacity of the fibre can be increased by replacing 10Gb/s DWDM signals with 40 Gb/s coherent signals or 100 Gb/s flexgrid signals. The present invention provides a flexible deployment path which enables a network operator to invest in new transmission capacity as technologies improve and customer demand increases. Without the present invention a network operator has to install a network with a single type of transmission technology and hope that their forecasts are correct.

According to a second aspect of the present invention there is provided a method of operating a communications network, the method comprising the steps of: a) generating a first optical signal in a first wavelength region; b) generating a second optical signal in a second wavelength region; c) launching the first optical signal and the second optical signal into a first end of an optical fibre; and at a second end of the optical fibre: d) selectively routing optical signals in the first wavelength region to a first output port; and e) selectively routing optical signals in the second wavelength region to a second output port.

Embodiments of the present invention will now be described, by way of example only, with reference to the accompanying drawings in which:
Figure 1 shows a schematic depiction of a communications network according to a first aspect of the present invention;
Figure 2 shows a schematic depiction of a network according to a further embodiment of the present invention;
Figure 3 shows a schematic depiction of a tunable splitter;
Figure 4 shows a schematic depiction an example of a mesh network according to a yet further embodiment of the present invention;
Figure 5 shows a schematic depiction of a first type of tunable splitter;
Figure 6 shows a schematic depiction of an alternative first type of tunable splitter; and
Figure 7 shows a schematic depiction of a second type of tunable splitter.

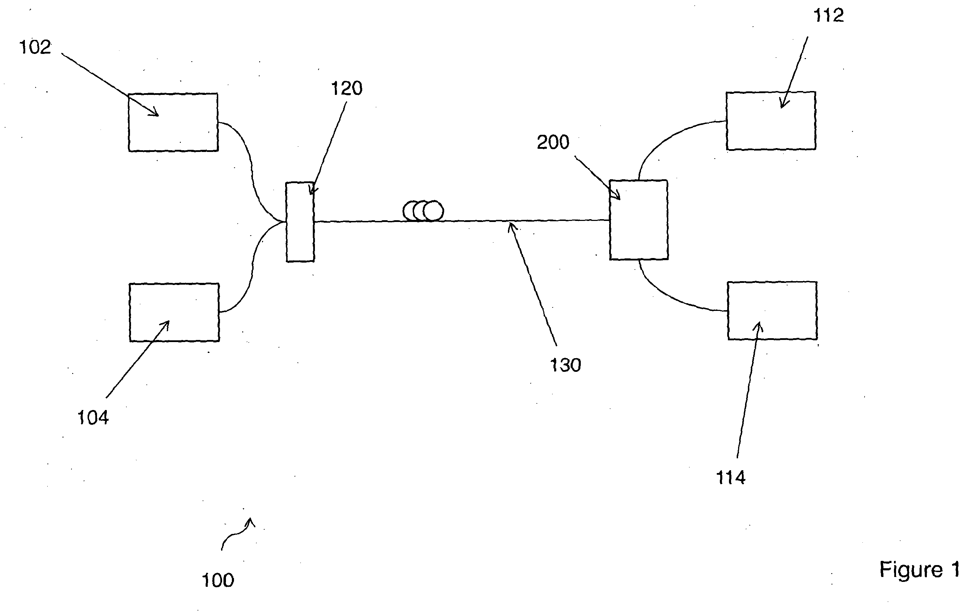

Figure 1 shows a schematic depiction of a communications network 100 according to a first aspect of the present invention. The network comprises a single span of optical fibre 130 which connects a first location to a second location. At the first location a first optical transmitter 102 is connected to the optical fibre 130 via an optical coupler 120. There is also provided at the first location a second optical transmitter 104 which is also coupled to the optical fibre 130 via the optical coupler 120. At the second location a tunable splitter 200 connects the second end of the optical fibre 130 to first optical receiver 112 and second optical receiver 114.

The first optical transmitter operates in a first region of a fibre transmission window and the second optical transmitter operates in a second region of that fibre transmission window. For example, the first optical transmitter may generate a first set of optical signals between 1525 and 1543 nm and the second optical transmitter may generate a second set of optical signals between 1547 and 1565 nm. By providing a separation in the wavelength domain then the first optical signals should not interfere with the second optical signals. To provide flexibility in the operation of the network, then the cut-off point between the first region of the fibre transmission window and the second region of the fibre transmission window can be varied. For example, if the second optical transmitter needs a greater amount of wavelength then the cut-off point can be moved to 1540 nm such that the first region of the fibre transmission window is 1525-1538 nm and the second region of the fibre transmission window is 1542-1565 nm.

Both the first and the second optical signals will propagate to the end of the optical fibre where tunable splitter 200 will separate the first optical signals from the second optical signals such that the first optical signals are routed to the first optical receiver 112 and the second optical signals are routed to the second optical receiver 114. The structure of tunable splitter 200 is described below in more detail. The network operational support systems (not shown in Figure 1) which can be used to determine the cut-off point between the first and second optical transmission windows can also be used to control the tunable splitter such that the first optical signal can be separated from the second optical signal.

Thus, the first optical signal is delivered to the first optical receiver and the second optical signal is delivered to the second optical receiver for decoding and subsequent and processing. Two different optical signals, which may be completely incompatible, can be transmitted over the same fibre by separating the signals in the wavelength domain.

For example, the first optical signal may comprise a number of non-coherent DWDM signals carrying data at 10 Gb/s and being transmitted at the wavelengths specified in G.694.1. The second optical signal may comprise one or more coherent optical signals, for example operating at 40 or 100 Gb/s, or one or more 100 Gb/s signals that are transmitted using a flexgrid arrangement, that is the signals are transmitted using a wavelength range that is convenient for the network operator, rather than using a wavelength that is specified by a body such as the ITU. By allowing the network operator to control the relative sizes of the first and second transmission windows the network operator can evolve the capacity of the network as technologies advance and data demands increase.

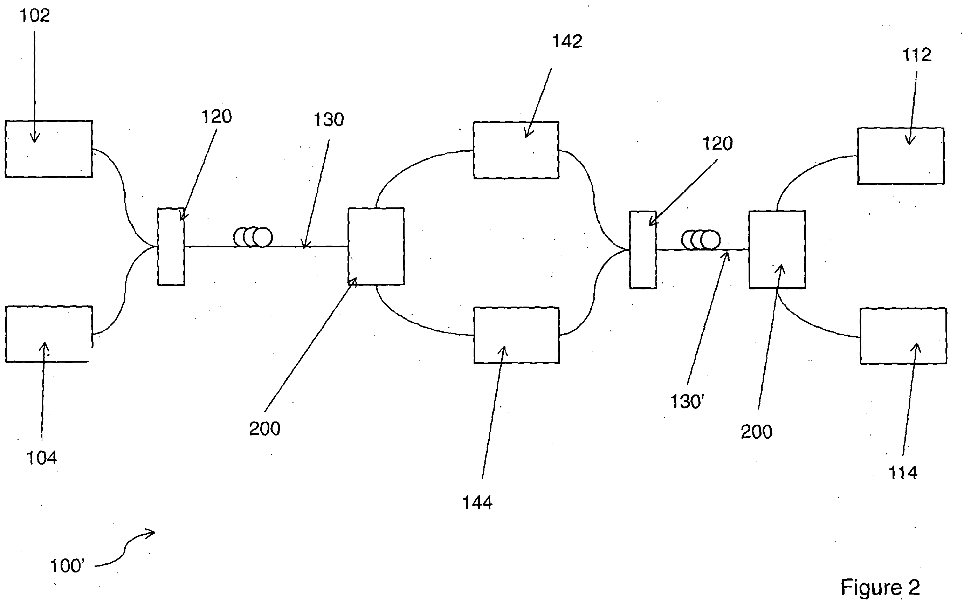

Figure 2 shows a schematic depiction of an example of a network 100' according to a further embodiment of the present invention. In this embodiment, the first and second locations are connected by two lengths of optical fibre 130, 130'. It will be understood that the optical signals will need to be regenerated, or amplified, at the mid-point of the network. After the first and second optical signals have been transmitted along the first length of fibre 130, tunable splitter 200 will separate them and route the first optical signal to a first optical signal regenerator 142 and the second optical signal to a second optical signal regenerator 144. The regenerated signals are then combined in optical coupler 120' and fed into second optical fibre 130'. At the end of the second optical fibre 130' the tunable splitter 200' separates the optical signals and routes the first optical signals to the first optical receiver 112 and the second optical signals to the second optical receiver 114. If the first optical signal were to comprise a number of non-coherent DWDM signals, then the first optical signal regenerator 142 would comprise, for example, an erbium-doped fibre amplifier and a DCM. If the second optical signal were to comprise a number of coherent optical signals then the second optical signal regenerator would comprise, for example, an erbium-doped fibre amplifier 144. It will be understood that a communications network according to the present invention could comprise multiple fibre links, with m fibre links being interspersed with *m*-*1* sets of optical repeaters.

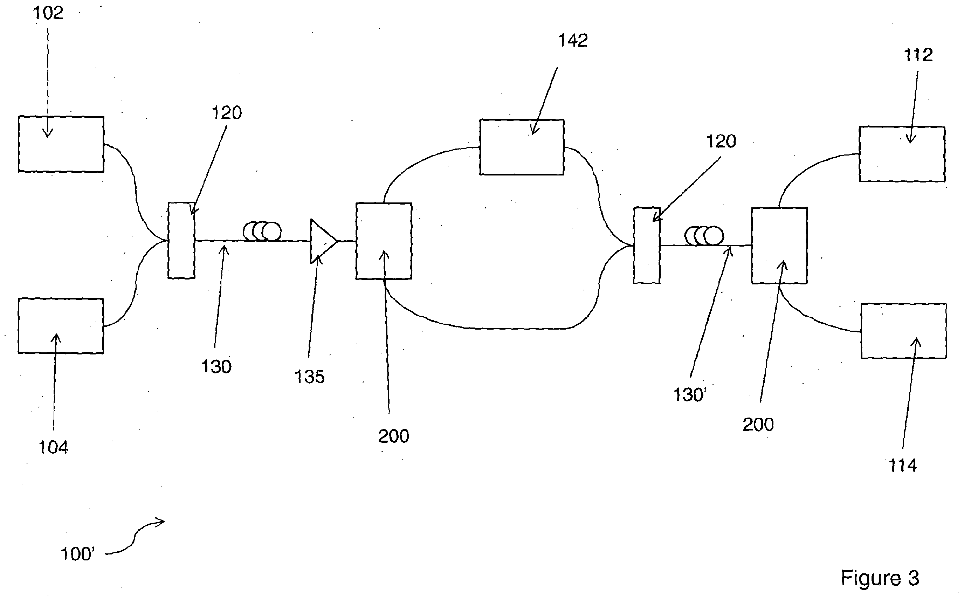

In the case where the first optical signal comprises a plurality of non-coherent DWDM signals and the second optical signal were to comprise a plurality of coherent optical signals then the network shown in Figure 2 may be modified into that shown in Figure 3. Figure 3 shows a schematic depiction of an alternative embodiment of a network according to the present invention in which an erbium doped fibre amplifier 135 is connected to the optical fibre, before the tunable splitter 200, such that both the first and second optical signals are amplified by the amplifier. This may then allow the first optical signal regenerator 142 to comprise solely a DCM and for the second optical signal regenerator to be dispensed with. It will also be understood that the EDFA could alternatively be located just after the coupler 120 or that two EDFAs could be used.

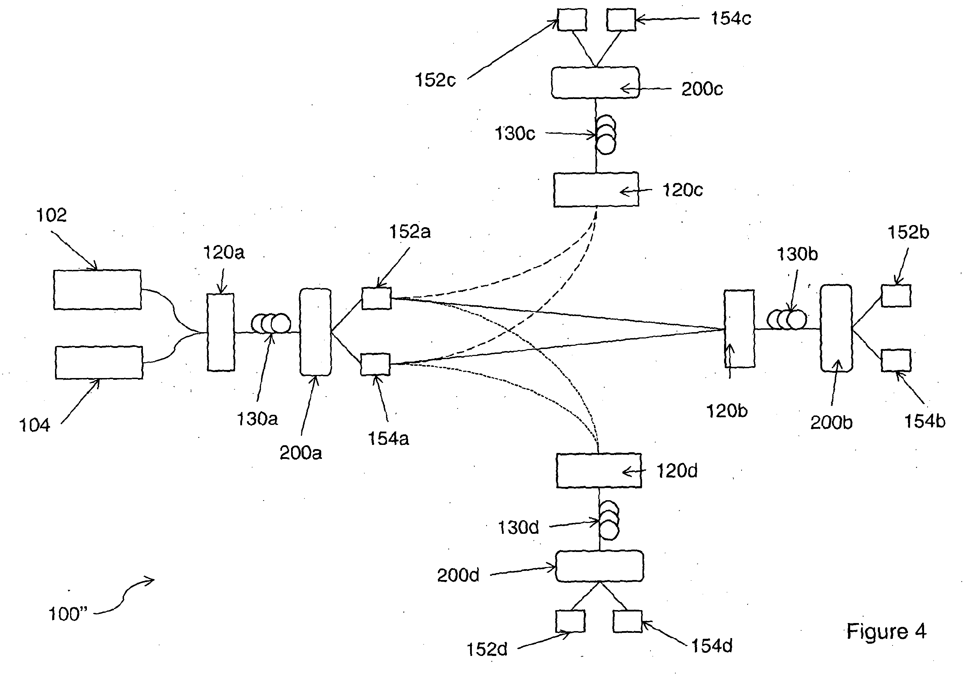

Figure 4 shows a schematic depiction of an example of a mesh network 100" according to a yet further embodiment of the present invention. At a first location first optical transmitter 102 and second optical transmitter 104 are connected to optical fibre 130a via optical coupler 120a. The first and second optical signals propagate along optical fibre 130a and are received at tunable splitter 200a at a second location such that the first optical signal is routed to first optical apparatus 152a and the second optical signal is routed to second optical apparatus 154a. The first and second optical apparatuses comprise signal regeneration and switching technology which is appropriate to the associated optical signal.

For example, if the first optical signal comprises a plurality of non-coherent DWDM signals then the first optical apparatus may comprise an optical regenerator (which may comprise an EDFA and a DCM) and a wavelength selective switch (WSS) which can selectively switch one or more of the DWDM signals to one or more output ports. If the second optical signal were to comprise a flexgrid signal then the second optical apparatus may comprise an EDFA and a flexgrid WSS.

The optical signals received at the first and second optical apparatuses 152a 154a may be destined to be routed to a further location or to be converted into the electrical domain and processed further at the second location. The first and second optical apparatuses can route optical signals selectively to optical couplers 120b, 120c and 120d. Each of these optical couplers is associated with a respective optical fibre 130b, 130c & 130d which connect to a respective tunable filter 200b, 200c & 200d. These tunable filters are located at third, fourth and fifth locations respectively. Each of the tunable splitters are connected to respective first and second optical apparatuses. For the sake of clarity, the connection between first and second optical apparatuses 152a and 154a with optical coupler 120b is shown with a solid line; the connection to optical coupler 120c is shown with a dashed line; and the connection to optical coupler 120d is shown with a dotted line.

Thus it can be seen that it is possible to route data from the first location to any of the other locations. It will be understood that the first and second optical apparatuses may comprise an appropriate OADM so that a portion of a wavelength region may be reused after an optical signal has been received at a particular location.

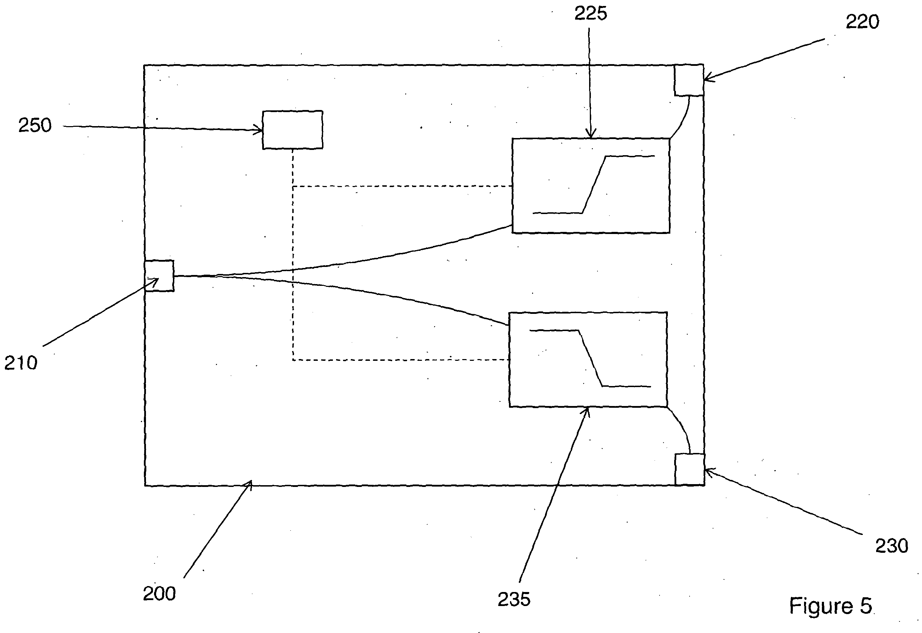

Figure 5 shows a schematic depiction of a first type of tunable splitter 200. The tunable splitter 200 comprises an input port 210, first and second output ports 220 230, first and second tunable filters 225 235 and control means 250. The optical signals received at the input port 210 are split into two parts, with a first part being routed to the first output port 220 and the second part being routed to the second output port 230. The optical signals routed to the first optical port 220 will pass through the first tunable filter 225 and the optical signals routed to the second optical port 230 will pass through the second tunable filter 235. The tunable filter characteristics of the first and second tunable filters are controlled by the control means 250 such that signals of the desired wavelength are routed to the appropriate output port such that they can be regenerated, switched or received by the appropriate equipment.

The tunable optical filters 225 & 235 may be formed using one of a number of different technologies. For example, the filters may be made in accordance with the teaching of US 7 304 799 in which a thermally tunable thin-film optical filter is fabricated on top of a crystalline silicon layer. By controlling the temperature of the optical filters, for example by sending current to an electric heater or a Peltier cooler as required, it is possible to control the performance of the optical filters such that one of the filters operates as a band-pass filter in the first region of the transmission window and the other filter operates as a band-pass filter in the second region of the transmission window. Following the discussion above it can be seen that further control of the filter performance, for example shrinking the size of the first region of the transmission window whilst expanding the size of the second region of the transmission window, can be achieved by appropriate control of the filter temperature.

It will be understood that such tuneable filters could be manufactured using other techniques. For example, suitable filters could be manufactured using, microelectromechanical systems (MEMS) or liquid crystal on silica (LCoS) technologies.

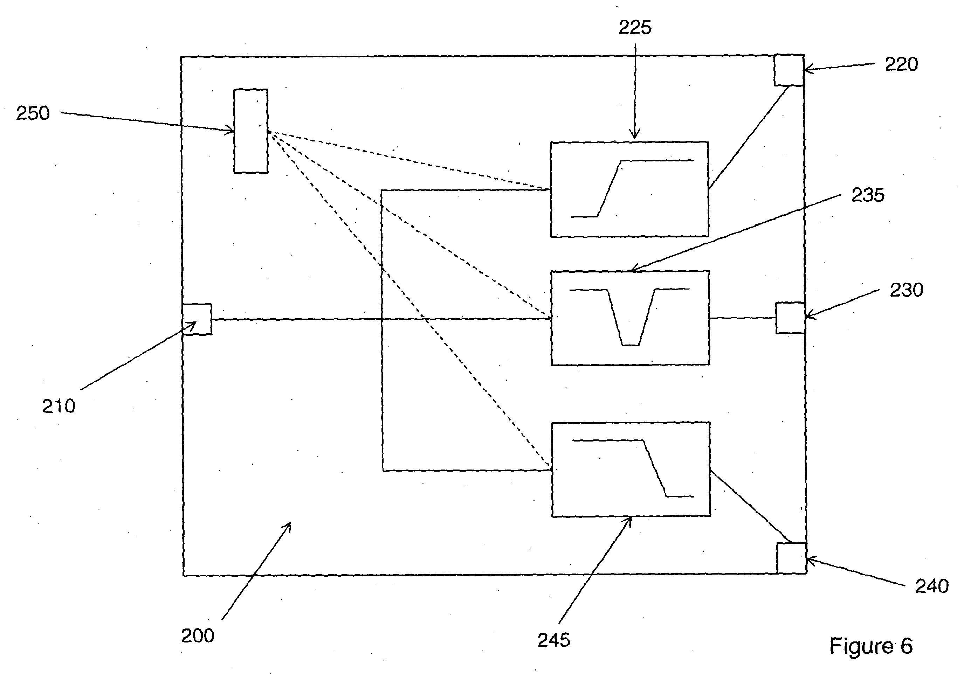

Figure 6 shows a schematic depiction of an alternative first type of tunable splitter 200'. Although the preceding discussion has been focused on a network where the wavelength is divided into two regions, it will be understood that the wavelength could be divided into three or more regions, with tunable band-pass filters being used to define the limits of one or more of the wavelength regions. The tunable splitter 200' of Figure 6 comprises an input port 210, first, second third and output ports 220 230 240, first, second and second tunable filters 225 235 245 and control means 250. The optical signals received at the input port 210 are split into three parts, with a first part being routed to the first output port 220, a second part being routed to the second output port 230 and a third part being routed to the third output port 240.

The optical signals routed to the first optical port 220 will pass through the first tunable filter 225, the optical signals routed to the second optical port 230 will pass through the second tunable filter 235 and the optical signals routed to the *third* optical port 240 will pass through the third tunable filter 245. The tunable filter characteristics of tunable filters are controlled by the control means 250 such that signals of the desired wavelength are routed to the appropriate output port such that they can be regenerated, switched or received by the appropriate equipment. For example, as is shown in Figure 6, the first tunable filter has a low-pass filter characteristic, the second tunable filter has a band-pass filter characteristic and the third tunable filter has a highpass filter characteristic. It will be understood that the tunable splitter 200' shown in Figure 6 could be varied further such that the transmission window is divided into four or more different wavelength regions. The boundaries between each of the different wavelength regions such that each of the regions can be used to carry the desired optical transmissions. The size of each of the regions need not be equal.

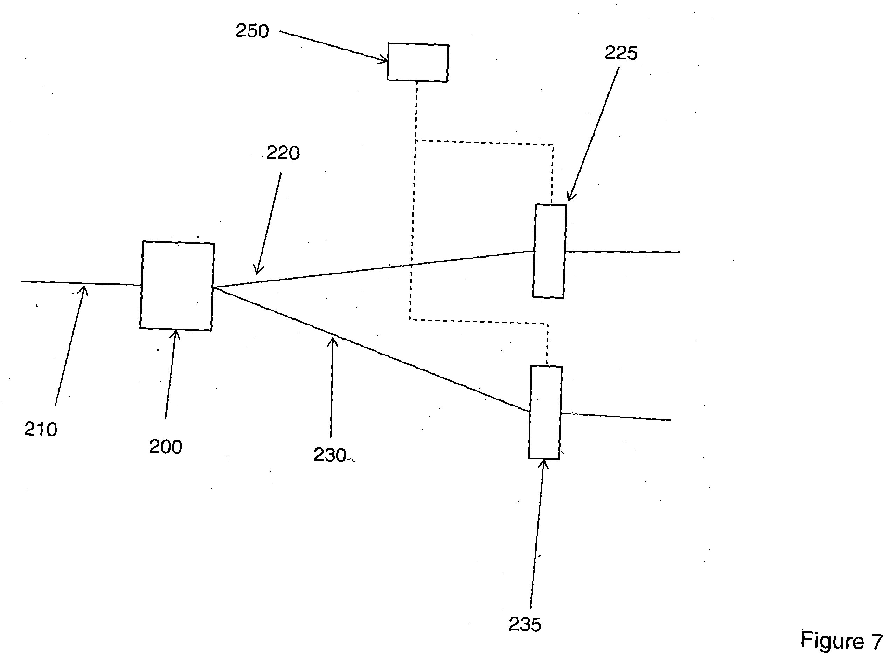

Figure 7 shows a schematic depiction of a second type of tunable splitter which comprises a conventional 1 x 2 optical splitter 200 which comprises an input port 210 and first and second output ports 220 230. The first output port 220 is connected to a first wavelength selective means 225 and the second output port 230 is connected to a second wavelength selective means 235. Both the first and second wavelength selective means are in communication with a control means 250. The first and second wavelength selective means may comprise the tunable filters described above, with reference to Figure 5. Alternatively the wavelength selective means may comprise a wavelength selective switch (WSS), which is able to select and then switch one or more pre-defined optical wavelengths.

For example, if the first optical signal were to comprise non-coherent DWDM signals and the second optical signals were to comprise coherent signals transmitted at wavelengths specified by G.694.1 then it would be possible to use conventional 1 x 2 WSSs as the first and second wavelength selective means. The first wavelength selective means will switch all of the wavelengths in the first wavelength region to an appropriate output, and thus on to the rest of the network, and will switch all of the wavelengths in the second wavelength region to a different output. Conversely, the second wavelength selective means will switch all of the wavelengths in the second wavelength region to an appropriate output and on to the rest of the network and will switch all of the wavelengths in the first wavelength region to a different output. Furthermore, it could be possible to replace the optical splitter 200 and the first and second wavelength selective means with a single WSS. Examples of suitable WSSs include the Finisar DWP50, DWP100 & DWP100E, and the JDSU Mini 100 ROADM. If controllable wavelength selective means, such as wavelength selective switches, are used to form a tunable splitter then the first and second wavelength regions may comprise one or more sub-regions of the transmission window, which need not be contiguous. Further to the discussion above with regard to Figure 6, then if controllable wavelength selective means are used to form a tunable splitter having three or more wavelength regions then each of these wavelength regions may comprise one or more sub-regions of the transmission window, which need not be contiguous.

Similarly, if the first optical signal were to comprise non-coherent DWDM signals and the second optical signals were to comprise flexgrid signals then the first wavelength selective means may comprise a conventional WSS and the second wavelength selective means may comprise a flexgrid WSS.

If a WSS is used to implement the tunable splitter then it may be possible to utilise spare ports on an existing WSS which is being used to switch optical signals between different locations, as is described above with reference to Figure 4.

It will be readily understood from the above discussion that the tunable splitter might take a number of different forms and be fabricated using a number of different technologies. It will be readily apparent to those skilled in the art that the exact form and nature of the tunable splitter is not relevant to the operation of a network according to the present invention as long as the tunable splitter can perform the function of splitting the first optical signals in the first region of the transmission window from the second optical signals in the second region of the transmission window.

The definition of the transmission window that can be used will be dependent on the performance of the tunable filters. Wavelengths from approximately 1525 to 1610 nm can be amplified by erbium-doped fibre amplifiers so there is no need for a filter that is tunable over a larger wavelength range than this. It should be understood that it is not necessary for a filter to be tunable over the entirety of the transmission window. For example, if the transmission window extends from 1525 - 1565 nm then filters that are tunable over a range of 30 nm would allow the first region of the transmission window to be varied from a lower limit of 1525 up to 1555 nm whilst the second region could be varied accordingly from an upper limit of 1565 nm down to 1535 nm. If the transmission window is narrower, or if the filters are tunable over a greater wavelength range, then the first region may occupy the entirety of the transmission window with the second region not transmitting any wavelengths, or *vice versa*. It will be understood that these principles apply equally to tunable filters which support three or more wavelength regions.

In summary, the present invention provides a communications network wherein first and second optical signals can be launched into an optical fibre in respective first and second regions of a transmission window such that controllable filters can be used to selectively recover the first and second optical signals. This partitioning of the transmission window allows two incompatible optical signals to coexist in the same optical fibre.

## Claims

1. An optical communications network (100) comprising:
a first optical source (102) configured, in use, to generate a first optical signal in a first wavelength region;
a second optical source (104) configured, in use, to generate a second optical signal in a second wavelength region;
combining means (120) to launch the first optical signal and the second optical signal into an optical fibre (130); and
a separation means (200) which can be configured, in use, to selectively route optical signals in the first wavelength region to a first output port and optical signals in the second wavelength region to a second output port **characterised in that**:
i) the first optical signal comprises one or more non-coherent signals being transmitted at wavelengths associated with a predetermined wavelength grid; and
ii) the second optical signal comprises one or more coherent optical signals.

2. An optical communications network (100) according to Claim 1, wherein, in use, the separation means (200) can be controlled to vary the wavelengths defined by the first wavelength region and/or the second wavelength region.

3. An optical communications network (100) according to Claim 1 or Claim 2, wherein the separation means (200) comprise one or more tuneable optical filters.

4. An optical communications network according to Claim 3, wherein the one or more tuneable optical filters (200) have a cut off wavelength, the filters being configured, in use, to selectively route optical signals in the first wavelength region to a first output port and optical signals in the second wavelength region to a second output port.

5. An optical communications network according to Claim 1 or Claim 2, wherein the separation means comprise one or more wavelength selective switches, the switches being configured, in use, to selectively route optical signals in the first wavelength region to a first output port and optical signals in the second wavelength region to a second output port.

6. A method of operating a communications network, the method comprising the steps of:
a) generating a first optical signal in a first wavelength region;
b) generating a second optical signal in a second wavelength region;
c) launching the first optical signal and the second optical signal into a first end of an optical fibre; and at a second end of the optical fibre:
d) selectively routing optical signals in the first wavelength region to a first output port; and
e) selectively routing optical signals in the second wavelength region to a second output port, **characterised in that**:
i) the first optical signal comprises one or more non-coherent signals being transmitted at wavelengths associated with a predetermined wavelength grid; and
ii) the second optical signal comprises one or more coherent optical signals.

## Patentansprüche

1. Optisches Kommunikationsnetzwerk (100), das umfasst:
eine erste optische Quelle (102), die so konfiguriert ist, dass sie im Betrieb ein erstes optisches Signal in einem ersten Wellenlängenbereich erzeugt;
eine zweite optische Quelle (104), die so konfiguriert ist, dass sie im Betrieb ein zweites optisches Signal in einem zweiten Wellenlängenbereich erzeugt;
eine Vereinigungseinrichtung (120) zum Einkoppeln des ersten optischen Signals und des zweiten optischen Signals in eine optische Faser (130)
und
eine Trenneinrichtung (200), die so konfiguriert sein kann, dass sie im Betrieb optische Signale in dem ersten Wellenlängenbereich selektiv zu einem ersten Ausgangsport und optische Signale in dem zweiten Wellenlängenbereich selektiv zu einem zweiten Ausgangsport leitet,
**dadurch gekennzeichnet, dass**
i) das erste optische Signal ein nicht-kohärentes Signal oder mehrere nicht-kohärente Signale umfasst, die bei Wellenlängen übertragen werden, die mit einem vorgegebenen Wellenlängen-Gitter verknüpft sind,
und
ii) das zweite optische Signal ein kohärentes optisches Signal oder mehrere kohärente optische Signale umfasst.

2. Optisches Kommunikationsnetzwerk (100) nach Anspruch 1, bei dem im Betrieb die Trenneinrichtung (200) so gesteuert werden kann, dass sie die durch den ersten Wellenlängenbereich und/oder den zweiten Wellenlängenbereich definierten Wellenlängen variiert.

3. Optisches Kommunikationsnetzwerk (100) nach Anspruch 1 oder Anspruch 2, bei dem die Trenneinrichtung (200) ein abstimmbares optisches Filter oder mehrere abstimmbare optische Filter umfasst.

4. Optisches Kommunikationsnetzwerk (100) nach Anspruch 3, bei dem das eine abstimmbare optische Filter oder die mehreren abstimmbaren optischen Filter (200) eine Grenzwellenlänge besitzen, wobei die Filter so konfiguriert sind, dass sie im Betrieb optische Signale in dem ersten Wellenlängenbereich selektiv zu einem ersten Ausgangsport und optische Signale in dem zweiten Wellenlängenbereich selektiv zu einem zweiten Ausgangsport leiten.

5. Optisches Kommunikationsnetzwerk (100) nach Anspruch 1 oder Anspruch 2, bei dem die Trenneinrichtung einen wellenlängenselektiven Schalter oder mehrere wellenlängen-selektive Schalter umfasst, wobei die Schalter so konfiguriert sind, dass sie im Betrieb optische Signale in dem ersten Wellenlängenbereich selektiv zu einem ersten Ausgangsport und optische Signale in dem zweiten Wellenlängenbereich selektiv zu einem zweiten Ausgangsport leiten.

6. Verfahren zum Betreiben eines Kommunikationsnetzwerks, wobei das Verfahren die folgenden Schritte umfasst:
a) Erzeugen eines ersten optischen Signals in einem ersten Wellenlängenbereich;
b) Erzeugen eines zweiten optischen Signals in einem zweiten Wellenlängenbereich;
c) Einkoppeln des ersten optischen Signals und des zweiten optischen Signals in ein erstes Ende einer optischen Faser, und an einem zweiten Ende der optischen Faser
d) selektives Leiten der optischen Signale in dem ersten Wellenlängenbereich zu einem ersten Ausgangsport
und
e) selektives Leiten der optischen Signale in dem zweiten Wellenlängenbereich zu einem zweiten Ausgangsport,
**dadurch gekennzeichnet, dass**
i) das erste optische Signal ein nicht-kohärentes Signal oder mehrere nicht-kohärente Signale umfasst, die bei Wellenlängen übertragen werden, die mit einem vorgegebenen Wellenlängen-Gitter verknüpft sind,
und
ii) das zweite optische Signal ein kohärentes optisches Signal oder mehrere kohärente optische Signale umfasst.

## Revendications

1. Réseau optique (100) de communications comprenant :
une première source optique (102) configurée, à l'utilisation, pour générer un premier signal optique dans une première région de longueurs d'onde ;
une deuxième source optique (104) configurée, à l'utilisation, pour générer un deuxième signal optique dans une deuxième région de longueurs d'onde ;
un moyen (120) de combinaison pour lancer le premier signal optique et le deuxième signal optique dans une fibre optique (130) ; et
un moyen (200) de séparation qui peut être configuré, à l'utilisation, pour acheminer sélectivement des signaux optiques dans la première région de longueurs d'onde jusqu'à un premier port de sortie et des signaux optiques dans la deuxième région de longueurs d'onde jusqu'à un deuxième port de sortie, **caractérisé en ce que** :
i) le premier signal optique comprend un ou plusieurs signal/signaux non cohérent(s) étant transmis à des longueurs d'onde associées avec une grille prédéterminée de longueurs d'onde ; et
ii) le deuxième signal optique comprend un ou plusieurs signal/signaux optique(s) cohérent(s).

2. Réseau optique (100) de communications selon la revendication 1, dans lequel, à l'utilisation, le moyen (200) de séparation peut être commandé pour faire varier les longueurs d'onde définies par la première région de longueurs d'onde et/ou la deuxième région de longueurs d'onde.

3. Réseau optique (100) de communications selon la revendication 1 ou la revendication 2, dans lequel le moyen (200) de séparation comprend un ou plusieurs filtre(s) optique(s) accordable(s).

4. Réseau optique de communications selon la revendication 3, dans lequel le ou les filtre(s) optique(s) accordable(s) (200) ont une longueur d'onde de coupure, les filtres étant configurés, à l'utilisation, pour acheminer sélectivement des signaux optiques dans la première région de longueurs d'onde jusqu'à un premier port de sortie et des signaux optiques dans la deuxième région de longueurs d'onde jusqu'à un deuxième port de sortie.

5. Réseau optique de communications selon la revendication 1 ou la revendication 2, dans lequel le moyen de séparation comprend un ou plusieurs commutateur(s) de sélection de longueurs d'onde, les commutateurs étant configurés, à l'utilisation, pour acheminer sélectivement des signaux optiques dans la première région de longueurs d'onde jusqu'à un premier port de sortie et des signaux optiques dans la deuxième région de longueurs d'onde jusqu'à un deuxième port de sortie.

6. Procédé de fonctionnement d'un réseau de communications, le procédé comprenant les étapes de :
a) génération d'un premier signal optique dans une première région de longueurs d'onde ;
b) génération d'un deuxième signal optique dans une deuxième région de longueurs d'onde ;
c) lancement du premier signal optique et du deuxième signal optique dans une première extrémité d'une fibre optique ; et, à une deuxième extrémité de la fibre optique :
d) acheminement sélectif de signaux optiques dans la première région de longueurs d'onde jusqu'à un premier port de sortie ; et
e) acheminement sélectif de signaux optiques dans la deuxième région de longueurs d'onde jusqu'à un deuxième port de sortie, **caractérisé en ce que** :
i) le premier signal optique comprend un ou plusieurs signal/signaux non cohérent(s) étant transmis à des longueurs d'onde associées avec une grille prédéterminée de longueurs d'onde ; et
ii) le deuxième signal optique comprend un ou plusieurs signal/signaux optique(s) cohérent(s).
